Europäisches Patentamt

European Patent Office

Office européen des brevets

(19)

(11) Numéro de publication: **0 147 338**
**B1**

(12) **FASCICULE DE BREVET EUROPÉEN**

(45) Date de publication du fascicule du brevet:
05.11.86

(51) Int. Cl.⁴: **C 04 B 35/48**, F 27 D 1/10

(21) Numéro de dépôt: 84420188.9

(22) Date de dépôt: 05.11.84

(54) Procédé d'obtention d'un pisé réfractaire à base de zircon électrofondu pour la fusion de métaux et alliages dans un four à induction.

(30) Priorité: 07.11.83 FR 8317985

(43) Date de publication de la demande:
03.07.85 Bulletin 85/27

(45) Mention de la délivrance du brevet:
05.11.86 Bulletin 86/45

(84) Etats contractants désignés:
BE DE GB IT LU NL

(56) Documents cité:
EP-A-0 049 366
FR-A-2 074 472
FR-A-2 346 304
GB-A-818 690

CHEMICAL ABSTRACTS, vol. 99, no. 8, 22 août 1983,
page 244, no. 57830u, Columbus, Ohio, US;
CHEMICAL ABSTRACTS, vol. 86, no. 20, 16 mai 1977,
page 300, no. 144599a, Columbus, Ohio, US.

(73) Titulaire: PECHINEY ELECTROMETALLURGIE, Tour
Manhattan La Défense 2-5, 6 place de l'Iris,
F-92400 Courbevoie (FR)

(72) Inventeur: Belon, Louise, Ile de Bray, F-74190 Le
Fayet (FR)
Inventeur: Guerin, Michel, 666, Chemin de la
Ravoire Passy, F-74190 Le Fayet (FR)
Inventeur: Septier, Louis, Le Beau Site 42, avenue
Ravanel Le Rouge, F-74400 Chamonix (FR)

(74) Mandataire: Pascaud, Claude, PECHINEY 28, rue
de Bonnel, F-69433 Lyon Cedex 3 (FR)

## Description

La présente invention concerne un procédé d'obtention d'un pisé réfractaire à base de zircon électro-fondu, pour la fusion de métaux et alliages dans un four à induction. Elle s'applique, en particulier, à la fusion des métaux ferreux, fontes et aciers, des cuivre et alliages cuivreux, du nickel, du cobalt, cette énumération n'étant pas limitative.

Le zircon naturel, est, en théorie, un silicate de zirconium $SiO_2$, $ZO_2$, mais, en pratique, sa composition selon son origine, peut varier de 10 à 40 % de $SiO_2$ et de 60 à 90 % de $ZrO_2$. Ce produit constitue un excellent réfractaire, car son point de fusion est supérieur à 2200° C, mais il subit, dès 1600-1650° C, une décomposition en $ZrO_2$ et $SiO_2$ qui en rend l'usage peu attractif.

On a tenté d'utiliser le zircon en mélange avec divers oxydes réfractaires: magnésie, corindon (alumine), oxyde de zirconium, en particulier pour la fusion de fontes et aciers au four à induction, mais les résultats n'ont pas été très satisfaisants. Or, les fours à induction prennent une importance de plus en plus grande dans les fonderies de métaux. Ces fours sont constitués d'une bobine conductrice refroidie généralement à l'eau, et destiné à contenir le métal. Ce réfractaire peut être constitué par des pièces de forme (briques), ou par une couche de produit pulvérulent tassé selon une méthode appropriée, et auquel on a ajouté ou non un agent de frittage. Ces produits réfractaires pulvérulents sont appelés "pisés damés à sec". Ce sont le plus souvent des oxydes réfractaires tels que la silice, la magnésie, l'alumine, ou leurs composés ou mélanges.

Compte-tenu des exigences de sécurité, de productivité et d'abaissement des prix de revient dans les fonderies modernes, la durée de vie de ces garnissages est considérée comme insuffisante.

On a proposé d'utiliser du zircon préalablement dissocié en $ZrO_2$ et $SiO_2$ dans un plasma, à une température qui n'est pas précisée, mais qui dépasse probablement 3000 à 4000° C (brevets FR A 2 314 159, GB A 1 598 699, CH A 627 426 aux noms de KEELING & WALKER Ltd). Le produit dissocié au plasma est réduit en poudre très fine, puis mis en forme et soumis à une cuisson pour obtenir un corps homogène, par exemple 1 h à 1600° C. La mise en forme est obtenue grâce à des additifs tels que des oxydes métalliques, des cires, des agglomérants polymériques, des agglomérants standards (argile). Toutefois, ce produit est de préparation relativement complexe (broyage jusqu'à quelques micromètres), sa préparation nécessite un générateur de plasma de coût élevé, et de production horaire relativement faible si l'on vise un taux de dissociation élevé, proche de 100 %. En outre, il doit subir un traitement chimique, pendant ou après le broyage, par exemple avec de la soude caustique ou de l'acide fluorhydrique, pour éliminer au moins une partie de la silice libre.

La présente invention permet de résoudre de façon simple et peu onéreuse, le problème de l'utilisation, à l'échelle industrielle, du zircon comme pisé réfractaire dans les fours de fusion à induction, notamment pour les fontes et aciers, de capacité unitaire allant de quelques kilos à quelques dizaines de tonnes.

Ce pisé est obtenu par fusion de zircon au four électrique. Pour éviter la réduction partielle de la silice, qui serait suivie d'une distillation des produits de réduction, et donc d'un appauvrissement du bain en silice, la fusion doit être menée avec certaines précautions. En particulier, l'impédance du four doit être msintenue à une valéur assez élevée, supérieure à 50 m Ω.

La vitesse de refroidissement du zircon électro-fondu doit être suffisante pour que le produit final se présente sous forme d'une dispersion de fines particules à structure dendritique d'une phase riche en zircone, noyées dans une matrice riche en silice. La vitesse de refroidissement du zircon fondu influence la taille des dendrites, mais ne modifie pas de façon significative les propriétés finales du produit lorsque la structure précédemment définie est obtenue.

Dans la mise en oeuvre industrielle de l'invention, le produit fondu est coulé en lingotière de graphite ou de fonte et en faible épaisseur, par exemple 10 à 15 cm. Mais la structure voulue peut être obtenue par tout procédé de refroidissement suffisamment rapide, tel que la granulation à l'air ou à l'eau, ou la coulée sur plaques, chaînes, boulets ou cylindres,ou tout autre processus industriel de trempe de réfractaire électrofondu. Après refroidissement, le zircon électrofondu est concassé et broyé.

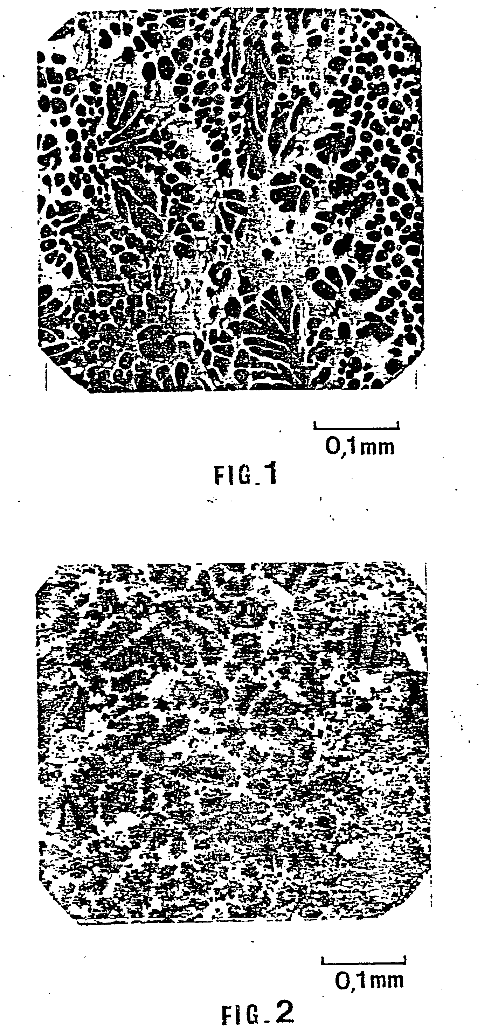

Les figures 1 et 2 représentent des coupes micrographiques de zircon électro-fondu, selon l'invention, à un grossissement de 200 X.

La figure 1 représente du zircon électro-fondu brut, et la figure 2 le même produit après environ 8 heures de service à 1600° C.

Sur la figure 1, la structure apparaît comme une dispersion de fines dendrites de $ZrO_2$ (en noir) dans une matrice de silice (en blanc).

Sur la figure 2, la transformation en silicate de zirconium a commencé, et la zone grisée qui entoure les grains est du silicate de zirconium reconstitué par réaction à l'état solide.

De façon à obtenir la granulométrie la plus favorable, pour assurer la compacité maximale du pisé damé, le zircon fondu broyé est tamisé et les grains obtenus sont mélangés en proportions convenables. La répartition la plus favorable se situe dans les intervalles suivants:

1 à 5 mm : 30 à 50 %, et de préférence 35 à 45 % en poids

0,1 à 1 mm : 30 à 50 % et de préférence 35 à 45 % en poids

< 0,1 mm : 20 à 30 % en poids.

Après broyage et obtention de la granulométrie souhaitée le produit est mis en place par simple damage à sec, sans aucun liant ou adjuvant, dans le four, entre la bobine d'induction et une virole aux formes et dimensions du creuset destiné à recevoir le métal ou alliage à fondre.

Après mise en place le produit est séché par maintien du four à 400°C environ pendant 30 min à 2 heures (pour éliminer les traces d'humidité éventuelles), puis il est cuit de façon à assurer la formation d'une couche céramique mince et continue constituant la paroi interne étanche du creuset.

Cette cuisson est menée selon les procédés habituels bien connus de l'homme de l'art: par exemple, en portant à la fusion une charge métallique préalablement placée dans le creuset, et en la maintenant ensuite à la température voulue pendant la durée nécessaire; ou en remplissant le creuset de métal liquide (préalablement fondu dans un autre appareil approprié) et en le maintenant ensuite à la température voulue pendant la durée nécessaire; ou en utilisant un brûleur capable d'atteindre la température voulue; ou par tout autre moyen nécessitant ou non le maintien de la virole métallique utilisée pour la mise en place du pisé.

La cuisson est réalisée par maintien du four pendant une durée d'au moins 1 heure à une température au moins égale à 1500°C. Il y a, bien entendu, une corrélation entre temps et température, dans une certaine limite. En pratique, l'intervalle de température de cuisson se situe entre 1450 et 1600°C, et la durée entre une demi-heure et trois heures.

Au cours de la première cuisson, on observe tout d'abord la formation d'une couche vitreuse continue et étanche comme dans le cas de la silice pure. Mais la zircone contenue réagit peu à peu avec la silice pour reformer du silicate de zirconium SiZrO$_4$. La couche céramique ainsi obtenue est à la fois plus réfractaire et plus dure que la silice pure; et c'est elle qui assure la longévité remarquable du pisé selon l'invention.

Ultérieurement, lorsque le four a été mis en service pour fondre, par exemple, des fontes ou des aciers, la céramisation progresse peu à peu vers la bobine d'induction, tandis que la face interne s'érode plus ou moins vite selon la température d'utilisation. Le produit reste néanmoins pulvérulent entre la bobine et la couche céramisée, permettant de stopper toute infiltration métallique en cas de fissuration accidentelle du creuset et assurant ainsi la sécurité.

Ce pisé est particulièrement bien adapté aux fusions effectuées à des températures trop élevées pour la silice, ou aux fusions d'alliages fluides (par exemple à base de nickel, ou de cupro-nickel). Il convient très bien au garnissage des fours utilisés pour fondre indifféremment des fontes ou des aciers.

**EXEMPLE D'APPLICATION**

Au cours d'une série d'essais industriels, ce pisé a été utilisé dans un four à induction avec un creuset de 2,5 tonnes de capacité. L'épaisseur initiale de la paroi était de 110 mm. Au cours de la campagne d'essai, on a fondu dans ce four (de façon discontinue) 52 tonnes d'acier et 98 tonnes de fontes, après quoi le four a été démonté. L'épaisseur moyenne de la paroi usée était de 60 à 70 mm, dont 15 à 20 mm céramisés. Aucune infiltration n'a été observée.

Dans le même four, utilisé dans les mêmes conditions, un garnissage en silice de bonne qualité ne permet la fusion, en moyenne, que de 70 T de métal avant de devoir être démonté et refait.

**Revendications**

Procédé d'obtention d'un pisé réfractaire à base de zircon, destiné au garnissage de fours à induction pour la fusion de métaux et alliages, et en particulier de fontes, d'aciers, de cuivre et d'alliages cuivreux, de nickel, de cobalt, caractérisé en ce que l'on fond du zircon dans un four à arc électrique, on le refroidit rapidement, on broye, tamise et calibre à une composition granulométrique prédéterminée, et on le met en place par damage à sec, sans aucun additif, pour former le creuset du four à induction.

2. Procédé, selon revendication I, caractérisé en ce que la composition granulométrique du pisé est la suivante:

1 à 5 mm : 30 à 50 % et, de préférence 35 à 45 % en poids

0,1 à 1 mm : 30 à 50 % et, de préférence 35 à 45 % en poids

< 0,1 mm : 20 à 30 % en poids.

3. Procédé, selon revendications 1 ou 2, caractérisé en ce que le pisé est cuit, avant la première opération de fusion, par préchauffage à environ 400°C pendant 1/2 heure à 2 heures pour éliminer toute trace d'humidité, puis chauffage de 1/2 heure à 3 heures à une température comprise entre 1450 et 1600°C.

**Claims**

1. A method of obtaining a refractary pisé based on zircon for lining induction turnaces for fusing metal, and alloys, particularly cast irons steels, copper ond copper alloys, nickel and cobalt, characterised in that the zircon is melted in an electric arc furnace, cooled rapidly, pulverised, screened and sized to a predetermined granulonetric composition, and mounted by dry tamping without any additive, to form the crucible or tbe induction furnance.

2. The method of claim 1, characterised in that the granulonetric composition of the piseé is as follows:

1 to 5 mm: 30 to 50% and preferably 35 to 45% by weight

0.1 to 7 mm: 30 to 50% and preferably 35 to 45% by weight

< 0.1 mm: 20 to 30% by weight.

3. The method of claim 1 or 2, characterised in that the pisé is calcined, before the first fusion operation, by preheating it to about 400°C for half an hour to two houre to eliminate any trace of humidity, then beating it for half an hour to three hours at a temperature of fron 1450 to 1600°C.

**Patentansprüche**

1. Verfahren zum Erzeugen einer feuerfesten Stampfmasse auf Zirkonbasis die zum Auskleiden von Induktionsöfen zum Schmelzen von Metallen und Legierungen, insbesondere von Gußeisen, Stählen, Kupfer und Kupferlegierungen, Nickel, Kobalt, bestinmt ist, <u>dadurch gekennzeichnet</u>, daß man Zirkon in einem Lichtbogenofen schmilzt, ihn rasch abkühlt, zerkleinert, siebt und auf eine vorbestimmte Korngrößenzusammensetzung kalibriert und ihn durch Trockenstampfen ohne irgendeinen Zusatz anbringt, um den Tiegel des Induktionsofen zu bilden.

2. Verfahren nach Anspruch 1, dadurch gekennzeichnet, daß die Korngrößenzusammensetzung der Stampfmasse die folgende ist:

1 bis 5 mm: 30 bis 50 Gew. % und vorzugsweise 35 bis 45 Gew. %

0,1 bis 1 mm:30 bis 50 Gew. % und vorzugsweise 35 bis 45 Gew. %

< 0,1 mm: 20 bis 30 Gew. %.

3. Verfahren nach Ansprüchen 1 oder 2, dadurch gekennzeichnet, daß die Stampfmasse vor dem ersten Schmelzvorgang durch Vorheizen auf etwa 400°C während 1/2 Stunde bis 2 Stunden zur Beseitigung jeder Feuchtigkeitsspur und danach Erhitzen von 1/2 Stunde bis 3 Stunden auf eine Temperatur im Bereich von 1450 bis 1600 °C gebrannt wird.

0,1mm

FIG_1

0,1mm

FIG_2